# EUROPÄISCHE PATENTSCHRIFT

(11) **EP 1 658 538 B1**
(45) Veröffentlichungstag und Bekanntmachung des Hinweises auf die Patenterteilung: **07.04.2010**
(21) Anmeldenummer: 03811375.9
(22) Anmeldetag: 13.11.2003
(51) Int. Cl.: G05B 19/418, G06F 9/44

(54) **VERFAHREN ZUM ERZEUGEN VON SOFTWAREMODULEN FÜR FELDGERÄTE DER PROZESSAUTOMATISIERUNGSTECHNIK**
METHOD FOR PRODUCING SOFTWARE MODULES FOR FIELD APPLIANCES USED IN THE PROCESS AUTOMATION TECHNIQUE
PROCEDE POUR GENERER DES MODULES LOGICIELS POUR DES APPAREILS DE TERRAIN DE LA TECHNIQUE D'AUTOMATISATION DE PROCESSUS

(30) Priorität: 15.11.2002 DE 10253603
(43) Veröffentlichungstag der Anmeldung: 24.05.2006
(73) Patentinhaber: Endress+Hauser Conducta Gesellschaft für Mess- und Regeltechnik mbH+Co. KG, 70839 Gerlingen (DE)
(72) Erfinder: GUNZERT,Michael, 76863 Herxheim (DE); WITTMER,Detlev, 75433 Maulbronn (DE); SCHULLERER,Joachim, 76764 Rheinzabern (DE)
(74) Vertreter: Andres, Angelika Maria
(86) Internationale Anmeldenummer: PCT/EP2003/012669
(87) Internationale Veröffentlichungsnummer: WO 2004/046837

(56) Entgegenhaltungen:
- US-B1- 6 304 877
- PROFIBUS-JOURNAL. PROFIBUS NUTZERORGANISATION E.V., KARLSRUHE, 1. Juli 2001 (2001-07-01) - 31. August 2001 (2001-08-31), XP002272346
- "PROFIBUS Technology and Application. System Description" 31. Oktober 2002 (2002-10-31) , PROFIBUS BENUTZERORGANISATION E.V. , KARLSRUHE XP002272347 4002 Seite 25 -Seite 27
- NAUMANN F ET AL: "TOGO-generating communication protocol implementations from formal specifications" FACTORY COMMUNICATION SYSTEMS, 1997. PROCEEDINGS. 1997 IEEE INTERNATIONAL WORKSHOP ON BARCELONA, SPAIN 1-3 OCT. 1997, NEW YORK, NY, USA,IEEE, US, 1. Oktober 1997 (1997-10-01), Seiten 287-296, XP010255509 ISBN: 0-7803-4182-1
- STRIPF W: "Why Application Profiles?" 18. Juli 2000 (2000-07-18) , PROFIBUS INTERNATIONAL 2000 XP002272348 Seite 13 -Seite 15
- SIMON R. ET AL: "Field device Integration" INDUSTRIAL ELECTRONICS, 2001. PROCEEDINGS. ISIE 2001. IEEE INTERNATIONAL SYMPOSIUM ON, [Online] vol. 1, 2001, - 15 June 2001 (2001-06-15) pages 150-155, Retrieved from the Internet: URL:http://ieeexplore.ieee.org/stamp/stamp .jsp?arnumber=931772&isnumber=20163> [retrieved on 2009-02-05]

## Beschreibung

Die Erfindung bezieht sich auf ein Verfahren zum Erzeugen von Softwaremodulen für Feldgeräte der Prozessautomatisierungstechnik.

In der Prozessautomatisierungstechnik werden häufig Feldgeräte eingesetzt, die zur Erfassung und/oder Beeinflussung von Prozessvariablen dienen. Beispiele für derartige Feldgeräte sind Füllstandsmessgeräte, Massedurchflussmesser, Druckmesser, Temperaturmesser etc., die die entsprechenden Prozessvariablen Füllstand, Massedurchfluss, Druck bzw. Temperatur erfassen.
Zur Beeinflussung von Prozessvariablen dienen sogenannte Aktoren, die z. B. als Ventile den Durchfluss einer Flüssigkeit in einem Rohrleitungsabschnitt beeinflussen.

Die Feldgeräte sind meist an einen Datenbus angeschlossen und in der Regel mit einem zentralen Leit- bzw. Engineeringsystem verbunden, das den gesamten Prozessablauf steuert bzw. einen direkten Zugriff auf die einzelnen Feldgeräte ermöglicht. Im Leitsystem werden die Messwerte der verschiedenen Prozessvariablen ausgewertet bzw. überwacht und die entsprechenden Aktoren zur Prozessbeeinflussung entsprechend angesteuert.
Die Datenübertragung zwischen Feldgerät und Leitsystem erfolgt nach den bekannten internationalen Standards für Feldbusse, wie z. B. Hart, Foundation Fieldbus, Profibus, CAN etc.

Heutigen Automatisierungsanlagen bestehen häufig aus einer Vielzahl von unterschiedlichen Feldgeräten unterschiedlichster Hersteller.
Vor der Inbetriebnahme bzw. auch während des Betriebs müssen Einstellungen an den Feldgeräten erfolgen. Diese Einstellungen müssen häufig vor Ort erfolgen. Hierfür stellen die einzelnen Feldgerätehersteller jeweils unterschiedliche Konfigurationsprogramme zur Verfügung.
Die Beherrschung der unterschiedlichen Programme einschließlich der unterschiedlichen Bedienphilosophien ist für den Anwender äußerst aufwendig und zeitraubend.
Die Parametrierung einzelner Feldgeräte oder die Konfigurierung bestimmter Feldgerätegruppen ist in einer Automatisierungsanlage mit einer Vielzahl von Feldgeräten aufgrund der verschiedenen Kommunikationsschnittstellen und der benötigten Protokolle äußerst aufwendig und teuer.
Die Konfigurierung, der Betrieb und die Wartung eines Feldgerätes in einer Automatisierungsanlage sollte erheblich einfacher möglich sein.
Angestrebt ist die Integration von Feldgeräte in Leitsysteme oder Engineering-Anwendungen über Plug and Play, wie sie bereits z. B. für Drucker bei Windows-Umgebungen bekannt ist.

Verschiedene Feldgerätehersteller haben sich deshalb in der PROFIBUS Nutzerorganisation e.V. zusammengeschlossen um eine einfachere Handhabung von Feldgeräten zu ermöglichen. Die Feldgerätehersteller entwickeln zu ihren Feldgeräten spezielle Softwaremodule, die zusammen mit dem Feldgerät an den Kunden ausgeliefert werden. Diese Softwaremodule kapseln alle Daten und Funktionen des jeweiligen Feldgerätes und stellen im Prinzip eine Black-Box dar.
Zusätzlich kann der Gerätehersteller noch in diese Softwaremodule sein eigenes Erscheinungsbild (look and feel) mit integrieren. D. h. die Bedienoberfläche sieht für den Anwender immer gleich aus unabhängig von der jeweiligen Anwendung.
Das Anwendungsprogramm, das z. B. zur Konfigurierung, zur Visualisierung, zum Betrieb und oder zur Wartung der verschiedenen Feldgeräte dient, greift über eine definierte Schnittstelle auf das jeweilige Softwaremodul des Feldgerätes zu.
Eine Möglichkeit ist die FDT/DTM Schnittstellenspezifikation wie im Profibus Guideline - Order No. 2.162 Stand November 2000, zu beziehen über die PROFIBUS- Nutzerorganisation e.V., Karlsruhe (www.profibus.com), angegeben, auf deren Inhalt speziell verwiesen wird.
Feldgeräte für die derartigen Softwaremodule existieren, sind somit einfach in Engineering-Anwendungen zu integrieren, sofern die Anwendung eine entsprechende Schnittstelle aufweist.

Aus dem Artikel "Field Device Integration von Simon R et. al., aus Industrial Electronics, 2001, Proceedings, ISIE 2001, IEEE International Symposion (Online) Bd. 1, 2001, 15. Juni 2001 Seiten 150-155 ist es bekannt geworden, aus elektronischen Standard-Gerätebeschreibungen gerätespezifische Softwarekomponenten, sog. DTMs (Device Type Manager) zu erstellen.

Momentan gibt es nur für wenige Feldgeräte entsprechende Softwaremodule. Für eine Vielzahl von Feldgeräten müssen die Softwaremodule vom jeweiligen Hersteller noch erstellt werden. Eine Möglichkeit ist vorhandene Gerätebeschreibungen mittels Compiler oder Generatoren in entsprechende Softwaremodule zu konvertieren.

Die vorhandenen Gerätebeschreibungen liegen jedoch nicht in einer einheitlichen Form bzw. Sprache vor. Es gibt PDM-Gerätebeschreibungen, HCF-Gerätebeschreibungen sowie firmenspezifische Gerätebeschreibungen, die in firmeninternen Datenbanken abgelegt sind. Für jede dieser Gruppen unterschiedliche Gerätebeschreibungen ist jedoch ein separater Compiler notwendig.

Nachteilig bei diesem Verfahren ist, dass man für unterschiedliche Gruppen von Gerätebeschreibungen jeweils unterschiedliche Compiler erstellen muss. Ein weiterer Nachteil dieses Verfahrens ist, dass bei Änderungen immer alle eingesetzten Compiler umgeschrieben werden müssen um Inkonsistenzen zu vermeiden. Dies macht das Erstellen von Softwaremodulen für Feldgeräte mittels vorhandener Gerätebeschreibungen sehr aufwendig.

Aufgabe der Erfindung ist es, ein Verfahren zum Erzeugen von Softwaremodulen für Feldgeräte der Prozessautomatisierungstechnik anzugeben, das in einfacher- und kostengünstiger Weise aus vorhandenen Gerätebeschreibungen die gewünschten Softwaremodule erzeugt.

Gelöst wird diese Aufgabe durch die in Anspruch 1 angegebenen Verfahrensschritte.

Wesentlich Idee der Erfindung ist es, nicht unterschiedliche Compiler für unterschiedliche Gruppen von vorhandenen Gerätebeschreibungen einzusetzen, sondern aus Standard- Gerätebeschreibungen für Feldgeräte syntaktisch und semantisch korrekte Standard- Gerätebeschreibungen zu erstellen und diese dann mittels eines Compilers in die entsprechenden Softwaremodule zu konvertieren.

Vorteilhafte Weiterentwicklung der Erfindung sind in den Unteransprüchen angegeben.

Nachfolgend ist die Erfindung anhand eines in der Zeichnung dargestellten Ausführungsbeispiels näher erläutert.

Es zeigen:
- Fig. 1:: Prinzipdarstellung einer Automatisierungsanlage.
- Fig. 2:: Wesentliche Elemente des erfindungsgemäßen Verfahrens in schematischer Darstellung.

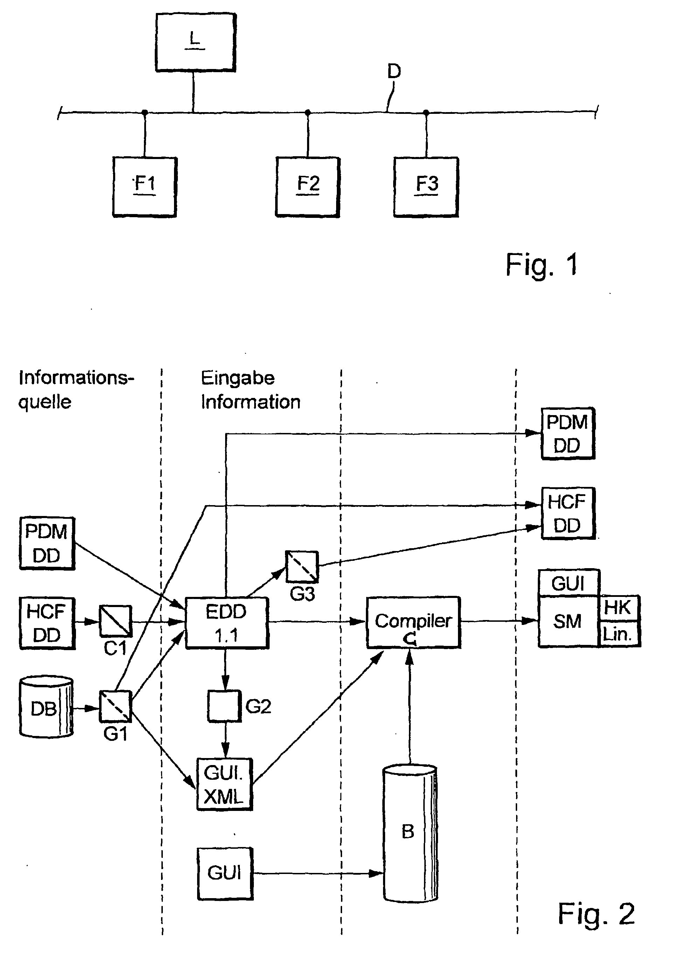

In Fig. 1 ist eine Prinzipdarstellung einer Automatisierungsanlage dargestellt. Ein Leitsystem L ist über einen Datenbus D mit mehreren Feldgeräten F1, F2, F3 etc. verbunden. Bei den Feldgeräten F1-F3 kann es sich z. B. um Druckmesser, Temperaturmesser oder Durchflussmesser etc. handeln. Das Leitsystem L kommuniziert über den Datenbus D mit dem jeweiligen Feldgerät z. B. F1. So können Messwerte oder Parameter des Feldgerätes ans Leitsystem L übertragen werden. Gleichzeitig kann die Parametrierung des Feldgerätes F1 vom Leitsystem L aus erfolgen.

Die Datenkommunikation auf dem Datenbus D erfolgt nach den entsprechenden internationalen Standards wie z. B. HART, Profibus, FF oder CAN.
Zu den momentan vertriebenen Feldgeräte existieren vielfach Gruppen von Gerätebeschreibungen in unterschiedlicher Form und Sprache. Als Beispiele hierfür sind in Figur 2 PDM-Gerätebeschreibungen, HCF-Gerätebeschreibungen und eine Datenbank DB mit firmeninternen Gerätebeschreibungen angegeben. Zumindest die PDM-Gerätebeschreibungen sowie die HCF-Gerätebeschreibungen enthalten Mehrdeutigkeiten.
In einem ersten Verfahrensschritt werden aus Standard-Gerätebeschreibungen (PDM-Gerätebeschreibungen, HCF-Gerätebeschreibungen, firmenspezifische Gerätebeschreibungen), syntaktisch und semantisch korrekte Standard-Gerätebeschreibung erstellt. Hierfür wird der Generator G1 bzw. der Compiler C1 eingesetzt.
Als Beispiel für eine semantisch und syntaktisch korrekte Standard-Gerätebeschreibung dient die EDD 1.1.. Anschließend wird die syntaktisch und semantisch korrekte Standard-Gerätebeschreibung mit Hilfe eines Compilers C in ein Softwaremodul SM (z. B. DTM) umgewandelt, das definierte Schnittstellen zu Anwendungsprogrammen im Prozessleitsystem aufweist. Durch die Erzeugung der Softwaremodule SM über den Zwischenschritt über eine EDD ergeben sich die wesentlichen Vorteile des erfindungsgemäßen Verfahrens. Es wird nur noch ein einziger Compiler C zur Erzeugung der Softwaremodule SM benötigt.

Weiterhin können durch die in syntaktisch und semantisch korrekte Form vorliegende Standard-Gerätebeschreibungen (EDD 1.1) ebenfalls leicht PDM-Gerätebeschreibungen erzeugt werden.

Darüber hinaus lassen sich aus Gerätebeschreibungen in EDD 1.1 mittels eines Generators G2 graphical user interfaces in XML-Sprache GUI.XML für die entsprechenden feldgerätespezifischen Komponenten (Konfiguration, Hilfefunktionen etc.) erzeugen. Hierzu kann auch der Generator G1 eingesetzt werden, der Informationen aus der Datenbank DB verarbeitet. Die so erzeugten Komponenten können dann ebenfalls im Compiler C verarbeitet werden.

Als weitere Möglichkeit bietet sich an, allgemeine graphical user interfaces GUI zu erzeugen und diese in einer Bibliothek B (DTM-Studio component library) abzuspeichern. Diese Komponenten können ebenfalls im Compiler C eingebunden werden, so dass das Softwaremodul SM auch propietäre Schnittstellen zu GUts bzw. zu Komponenten HK bzw. Lin. aufweisen. Hierdurch lassen sich eine Hüllkurvendarstellung (Komponente HK) bzw. eine Linearesierung (Komponente Lin.) in einfacher Weise in entsprechende Softwaremodule SM integrieren.

## Patentansprüche

1. Verfahren zum Erzeugen von Softwaremodulen (SM) für Feldgeräte (F1, F2, F3) der Prozessautomatisierungstechnik, die alle Daten und Funktionen des entsprechenden Feldgeräts (F1; F2; F3) kapseln, als Gerätebeschreibungen dienen und definierte Schnittstellen zu Anwendungsprogrammen in Prozessleitsystemen (L) aufweisen, **dadurch gekennzeichnet, dass** aus PDM-Gerätebeschreibungen, HCF-Gerätebeschreibungen oder aus firmenspezifischen elektronischen Gerätebeschreibungen für Feldgeräte (F1, F2, F3) syntaktisch und semantisch korrekte Standard-Gerätebeschreibungen (EDD1.1) mittels eines ersten Compilers (C1) erzeugt werden und dass die syntaktisch und semantisch korrekten Standard-Gerätebeschreibungen (EDD1.1) mittels eines zweiten Compilers ( C) in die entsprechenden Softwaremodule (SM) umgewandelt werden.

2. Verfahren nach Anspruch 1, **dadurch gekennzeichnet, dass** die Schnittstellen und die Softwaremodule (SM) den FDT/DTM Spezifikationen entsprechen.

3. Verfahren nach einem der vorhergehenden Ansprüche, **dadurch gekennzeichnet, dass** die syntaktisch und semantisch korrekten Standard-Gerätebeschreibungen EDD1.1 sind.

## Claims

1. Method for creating software modules (SM) for field devices (F1, F2, F3) used in process automation technology that encapsulate all the data and functions of the corresponding field device (F1; F2; F3), serve as device descriptions and have defined interfaces to application programs in process control systems (L), **characterized in that** syntactically and semantically correct standard device descriptions (EDD1.1) can be generated from PDM device descriptions, HCF device descriptions or company-specific electronic device descriptions for field devices (F1, F2, F3) using a first compiler (C1), and **in that** the syntactically and semantically correct standard device descriptions (EDD1.1) can be converted to the corresponding software modules (SM) using a second compiler (C).

2. Method as per Claim 1, **characterized in that** the interfaces and the software modules (SM) correspond to the FDT/DTM specifications.

3. Method as per one of the previous claims, **characterized in that** the syntactically and semantically correct STANDARD device descriptions are EDD1.1.

## Revendications

1. Procédé destiné à la génération de modules logiciels (SM) pour des appareils de terrain (F1, F2, F3) de la technique d'automatisation des process, qui encapsulent toutes les données et fonctions de l'appareil de terrain (F1, F2, F3) correspondant, servent de descriptions d'appareil et comportent des interfaces définies avec des programmes d'application au sein de systèmes de contrôle-commande (L), **caractérisé en ce que** des descriptions d'appareil standard (EDD1.1) correctes d'un point de vue syntaxe et sémantique sont générées au moyen d'un premier compilateur (C1) à partir de descriptions d'appareil PDM, descriptions d'appareil HCF ou à partir de descriptions d'appareil électroniques, spécifiques aux entreprises, pour appareils de terrain (F1, F2, F3), et que les descriptions d'appareil correctes d'un point de vue syntaxe et sémantique sont converties au moyen d'un deuxième compilateur (C) en modules logiciels (SM) correspondants.

2. Procédé selon la revendication 1, **caractérisé en que** les interfaces et les modules logiciels (SM) sont conformes aux spécifications FDT/DTM.

3. Procédé selon l'une des revendications précédentes, **caractérisé en ce que** les descriptions d'appareil correctes d'un point de vue syntaxe et sémantique sont des descriptions EDD1.1.
